# EUROPEAN PATENT APPLICATION

(11) **EP 4 666 892 A1**
(43) Date of publication of application: **24.12.2025**
(21) Application number: 23922608.7
(22) Date of filing: 13.02.2023
(51) Int. Cl.: A24F 40/90

(54) **POWER SUPPLY UNIT FOR AEROSOL GENERATION DEVICE AND CONTROL METHOD**

(71) Applicant: Japan Tobacco Inc., Tokyo 105-6927 (JP)
(72) Inventor: MARUBASHI Keiji, Tokyo 130-8603 (JP)
(74) Representative: Hoffmann Eitle
(86) International application number: PCT/JP2023/004839
(87) International publication number: WO 2024/171268

(57) **Abstract**

An inhalation device (100) for generating an aerosol by heating an aerosol source comprises: a power source unit (111) configured to be capable of supplying power to a heating unit (121) for heating the aerosol source; a receptacle (101) which is configured to enable insertion of a plug (52) of a charging device (50) and receives power from the inserted plug (52); and a control unit (116) configured to be capable of controlling power supply to the heating unit (121). The control unit (116) identifies the type of charging device (50) comprising the plug (52) when said plug (52) has been inserted into the receptacle (101), and controls power supply to the heating unit (121) based on a result of identifying the type of charging device (50) if there is an aerosol generation request from a user while the power source unit (111) is being charged with power received via the receptacle (101).

## Description

### TECHNICAL FIELD

The present disclosure relates to a power supply unit for an aerosol-generating device, and to a control method.

### BACKGROUND ART

Aerosol generation devices that generate an aerosol to which a flavor component has been added and enable a user to inhale the generated aerosol, for example, are conventionally known. Such aerosol-generating devices typically generate an aerosol by heating an aerosol source, using a heating unit (also referred to as a "heating element"), which is an electrical resistance type or inductive heating type heater.

For example, PTL 1 below discloses technology relating to a power supply unit for an aerosol inhaler, comprising: a power source capable of discharging to a first load for heating an aerosol source and to a second load for heating a flavor source; and an MCU for controlling discharge to the load being controlled, which is the first load and/or the second load, wherein the MCU controls discharge to the load being controlled based on any of a plurality of control profiles.

Furthermore, PTL 2 below discloses technology relating to an aerosol delivery device comprising: a heating element configured to convert electricity to heat and thereby vaporize components of an aerosol precursor composition; a power source including one or more batteries or battery cells coupled to and configured to power a load including the heating element; and charge circuitry coupled to and configured to charge the power source, the charge circuitry including: an electrical connector configured to connect the charge circuitry to a power supply from which the power source is chargeable; and a buck-boost charge controller coupled to and between the power source and power supply, and configured to regulate output voltage and output current from the power supply to the power source, selectively in one of a plurality of modes based on a condition of the power supply.

### CITATION LIST

### PATENT LITERATURE

PTL 1 WO 2022/123796 A1
PTL 2 JP 2021-533758 A

### SUMMARY OF INVENTION

### TECHNICAL PROBLEM

The power supply unit of an aerosol-generating device typically comprises: a power source configured to be capable of supplying power to a heating unit for heating an aerosol source; and a receptacle configured to enable insertion of a plug of a charging device, and the power source is charged with power received via the receptacle. For user convenience, the power source is preferably chargeable by means of as many types of charging devices as possible, and it is also preferable for a user to be able to inhale the aerosol while the power source is being charged. Meanwhile, from a safety perspective, it is desirable to ensure that an excessive load is not applied to the charging device.

The present disclosure provides a power supply unit for an aerosol-generating device, in which the type of connected charging device can be identified, and control commensurate with a result of this identification can be performed, and also provides a control method.

### SOLUTION TO PROBLEM

One aspect of the present disclosure is
a power supply unit for an aerosol-generating device for generating an aerosol by heating an aerosol source, the power supply unit comprising:
a power source configured to be capable of supplying power to a heating unit for heating the aerosol source; and
a receptacle which is configured to enable insertion of a plug of a charging device and receives power from the inserted plug; and
a control unit configured to be capable of controlling power supply to the heating unit, wherein
the control unit
is configured to be capable of identifying the type of charging device comprising the plug when said plug has been inserted into the receptacle, and
controls power supply to the heating unit based on a result of identifying the type of charging device if there is an aerosol generation request from a user while the power source is being charged with power received via the receptacle.

Furthermore, another aspect of the present disclosure is
a control method performed by a computer for controlling a power supply unit for an aerosol-generating device for generating an aerosol by heating an aerosol source, wherein the power supply unit comprises
a power source configured to be capable of supplying power to a heating unit for heating the aerosol source; and
a receptacle which is configured to enable insertion of a plug of a charging device and receives power from the inserted plug,
and wherein
the computer is configured to be capable of controlling power supply to the heating unit, and the computer implements processing which
identifies the type of charging device comprising the plug when said plug has been inserted into the receptacle, and
controls power supply to the heating unit based on a result of identifying the type of charging device if there is an aerosol generation request from a user while the power source is being charged with power received via the receptacle.

### ADVANTAGEOUS EFFECTS OF INVENTION

The present disclosure makes it possible to provide a power supply unit for an aerosol-generating device, in which the type of connected charging device can be identified, and control commensurate with a result of this identification can be performed, and also to provide a control method.

### BRIEF DESCRIPTION OF DRAWINGS

Fig. 1A is a schematic diagram schematically showing a first configuration example of an inhalation device.
Fig. 1B is a schematic diagram schematically showing a second configuration example of an inhalation device.
Fig. 2 is a diagram showing an example of a charging system 10.
Fig. 3 is a diagram showing an example of a circuit configuration of an identification circuit 55 provided in each type of charging device 50.
Fig. 4 is a flowchart showing an example of control performed by a control unit 116 in relation to charging of a power source unit 111.
Fig. 5 is a flowchart showing an example of control performed by the control unit 116 in relation to aerosol generation.
Fig. 6 is a diagram showing an example of settings information defining operations of an inhalation device 100 corresponding to each type of charging device 50.
Fig. 7 is a diagram showing another example of settings information defining operations of the inhalation device 100 corresponding to each type of charging device 50.
Fig. 8 is a diagram showing a variant example of the inhalation device 100.

### DESCRIPTION OF EMBODIMENTS

Embodiments of the power supply unit for an aerosol-generating device and control method according to the present disclosure will be described in detail below with reference to the drawings. The embodiments described below constitute an example in which the aerosol-generating device of the present disclosure is applied to an inhalation device. Note that the drawings shall be viewed in the orientation of the reference signs. Furthermore, hereinafter, identical or similar elements may be assigned identical or similar reference signs, and descriptions thereof may be omitted or simplified as appropriate.

### 1. Configuration example of inhalation device

An inhalation device constituting an example of the aerosol-generating device of the present disclosure is a device for generating a substance to be inhaled by a user. Hereinafter, the substance generated by the inhalation device will be described as being an aerosol. Additionally, the substance generated by the inhalation device may be a gas.

### 1-1. First configuration example of inhalation device

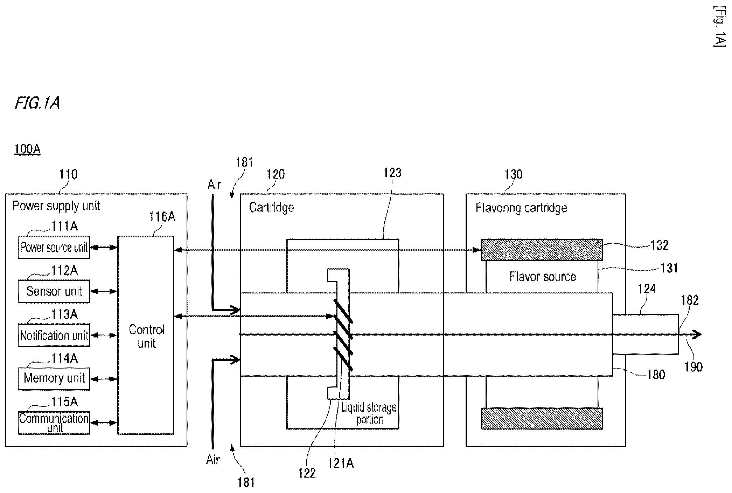

Fig. 1A is a schematic diagram schematically showing a first configuration example of the inhalation device. As shown in fig. 1A, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow passage 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

As an example, the sensor unit 112A may include a pressure sensor (also referred to as a "puff sensor") for detecting a change in pressure (also referred to hereinafter as "internal pressure") in the inhalation device 100A caused by inhalation by the user. As another example, the sensor unit 112A may include a flow sensor for detecting a flow rate caused by inhalation by the user (hereinafter simply referred to as "flow rate"). In addition, as another example, the sensor unit 112A may include a temperature sensor (also referred to as a "puff thermistor") for detecting the temperature of the heating unit 121A or the temperature around the heating unit 121A.

Furthermore, the sensor unit 112A may further comprise an input device, such as an operation button or a switch, for accepting input of information from the user. As an example, the sensor unit 112A may include an operation button serving as the input device that accepts a heating start operation, which will be described later.

The notification unit 113A notifies the user of information. The notification unit 113A can be configured by a light-emitting device which emits light, a display device which displays images, a sound output device which outputs sound, or a vibration device which vibrates, etc., for example.

The memory unit 114A stores various information (e.g. programs and data) for operation of the inhalation device 100A. The memory unit 114A can be configured by a nonvolatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs stored in the memory unit 114A, etc. The control unit 116A is realized by a CPU (central processing unit) or an electronic circuit such as a microprocessor, for example. As an example, the control unit 116A can be realized by an MCU 105 (MCU: Micro Controller Unit), or the like, which will be described later.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1A, the heating unit 121A is configured as a coil obtained by winding a heating resistor, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of a conductive material, such as a metal, and generates heat by means of electromagnetic induction. Furthermore, the susceptor is arranged adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be arranged inside a container such as a capsule.

The air flow passage 180 is a flow passage for air to be inhaled by the user. The air flow passage 180 has a tubular structure with an air inflow hole 181, which is an inlet for air into the air flow passage 180, and an air outflow hole 182, which is an outlet for air from the air flow passage 180, at the two ends thereof. Part way along the air flow passage 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

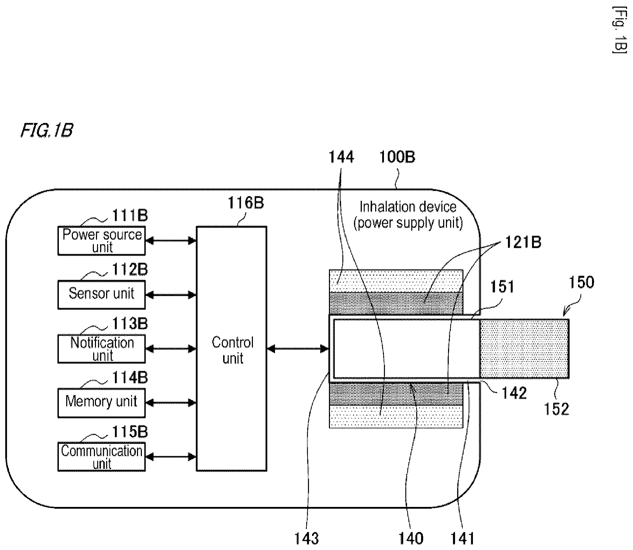

Furthermore, the inhalation device 100A further includes a flavor source heating unit 132 for heating the flavor source 131. The flavor source heating unit 132 is formed by any material, such as a metal or polyimide, in any shape, such as coiled, film-like or blade-like. In the example shown in fig. 1, the flavor source heating unit 132 has a film-like form and is arranged so as to cover the outer circumference of the flavor source 131. The flavor source heating unit 132 then generates heat when supplied with power from the power source unit 111A, heating the flavor source 131 from the outer periphery thereof. It should be noted that the flavor source heating unit 132 may equally be configured to heat the flavor source 131 from the inside. The flavor source heating unit 132 may also be configured in a blade shape, piercing the flavor source 131 to heat the flavor source 131 from the inside, for example. Furthermore, the flavor source heating unit 132 may be configured to heat the flavor source 131 by means of vibration or induction heating.

Providing the flavor source heating unit 132 makes it possible to increase the temperature of the flavor source 131 and to increase the amount of flavor component added to the aerosol, as compared to when the flavor source heating unit 132 is not provided.

It should be noted that the flavor source heating unit 132 is provided in the flavoring cartridge 130 in the example shown in fig. 1A, but this is not limiting. For example, when the inhalation device 100A has a configuration in which the flavoring cartridge 130 is accommodated in an accommodating portion (not depicted) provided in the power supply unit 110, the flavor source heating unit 132 may be provided in the power supply unit 110 so as to cover the outer circumference of the accommodating portion. In such a case, the flavor source heating unit 132 generates heat by a supply of power from the power source unit 111A, and the flavoring cartridge 130 (i.e., the flavor source 131) accommodated in the accommodating portion is heated from the outer circumference.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A need not include the flavor source heating unit 132. Even if the flavor source heating unit 132 is not provided, the temperature of the flavor source 131 may also be raised to a certain extent (e.g., to 40 [°C]) by the aerosol generated by means of the heating unit 121A, as said aerosol passes through the flavor source 131.

Furthermore, as another example, the inhalation device 100A may include a plurality of types of aerosol sources. A plurality of types of aerosol generated from the plurality of types of aerosol sources may be mixed within the air flow passage 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second configuration example of inhalation device

Fig. 1B is a schematic diagram schematically showing a second configuration example of the inhalation device. As shown in fig. 1B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 1B, the inhalation device 100B itself may also be referred to as the power supply unit.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source comprises a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

In the example shown in fig. 1B, the heating unit 121B is configured as a film heater with a conductive track made of a heating resistor having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. Note that a heating resistor the same as that of the heating unit 121A described above may be used as the heating resistor of the heating unit 121B.

The heat insulating portion 144 prevents heat transfer from the heating unit 121B to other components. For example, the heat insulating portion 144 is configured by a vacuum insulating material or an aerogel insulating material, etc.

A configuration example of the inhalation device 100B has been described above. The inhalation device 100B is, of course, not limited to the configuration described above, and various configurations, such as those illustrated below by way of example, may be adopted.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A, etc. may be referred to as the "power source unit 111", the sensor unit 112A, etc. may be referred to as the "sensor unit 112", the notification unit 113A, etc. may be referred to as the "notification unit 113", the memory unit 114A, etc. may be referred to as the "memory unit 114", the communication unit 115A, etc. may be referred to as the "communication unit 115", the control unit 116A, etc. may be referred to as the "control unit 116", and the heating unit 121A, etc. may be referred to as the "heating unit 121".

### 2. Charging system

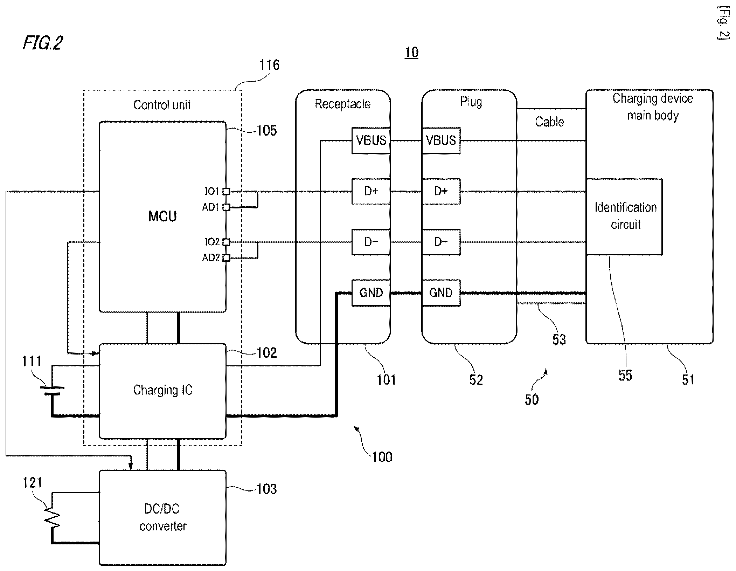

Fig. 2 is a diagram showing an example of a charging system 10. The charging system 10 shown in fig. 2 is a system enabling charging of the power source unit 111 of the inhalation device 100. It should be noted that, in fig. 2, power lines denoted by thick solid lines are power lines having a reference potential in the charging system 10. Hereinafter, the reference potential of these power lines is assumed to be 0 [V]. Unless explicitly stated otherwise, voltages in the following description are assumed to mean the potential difference from this reference potential (i.e., 0 [V]).

As shown in fig. 2, the charging system 10 comprises a charging device 50 and the inhalation device 100.

The charging device 50 is a device capable of outputting predetermined power to the inhalation device 100 electrically connected thereto. Here, the predetermined power is the power which the inhalation device 100 is capable of receiving in terms of hardware, and may be, for example, DC power having a predetermined voltage (e.g., 5-20 [V]). The power output by the charging device 50 will also be referred to below as "supply power P".

As an example, the charging device 50 generates the DC power from power received from an external power source (not depicted), and outputs this DC power as the supply power P. Here, the external power source is, for example, a mains power source supplying AC power having a predetermined voltage (e.g., 100 [V]) and a predetermined frequency (e.g., 50 or 60 [Hz]).

In this embodiment, the charging device 50 comprises: a charging device main body 51, a plug 52, and a cable 53 electrically connecting the charging device main body 51 and the plug 52. The plug 52 and the cable 53 may be provided so as to be detachable from the charging device main body 51, or may be provided so as to be difficult to detach.

The charging device main body 51 comprises, for example, a diode, a smoothing capacitor, a transistor, and a transformer, etc., none of which is depicted, and, using the functions of such components, generates the supply power P (e.g., the abovementioned DC power) from AC power received from the external power source. The charging device main body 51 then outputs the generated supply power P to the outside via the plug 52.

An AC adapter (AC: alternating current) is an example of the charging device main body 51, but this is not limiting, and it may equally be an electronic device such as a PC (personal computer) configured to be capable of outputting predetermined power to the outside, for example. Furthermore, the charging device main body 51 may also be a portable charger (also referred to as a "power bank") configured to be capable of outputting the power of a rechargeable battery provided therein to the outside, or a smartphone or tablet terminal, etc.

Furthermore, the charging device 50 comprises an identification circuit 55 commensurate with the type of charging device 50. In this embodiment, it will be assumed that the identification circuit 55 is provided in the charging device main body 51, but this is not limiting. For example, when the plug 52 and the cable 53 are provided so as to be detachable from the charging device main body 51, the identification circuit 55 may be provided in the plug 52 or the cable 53.

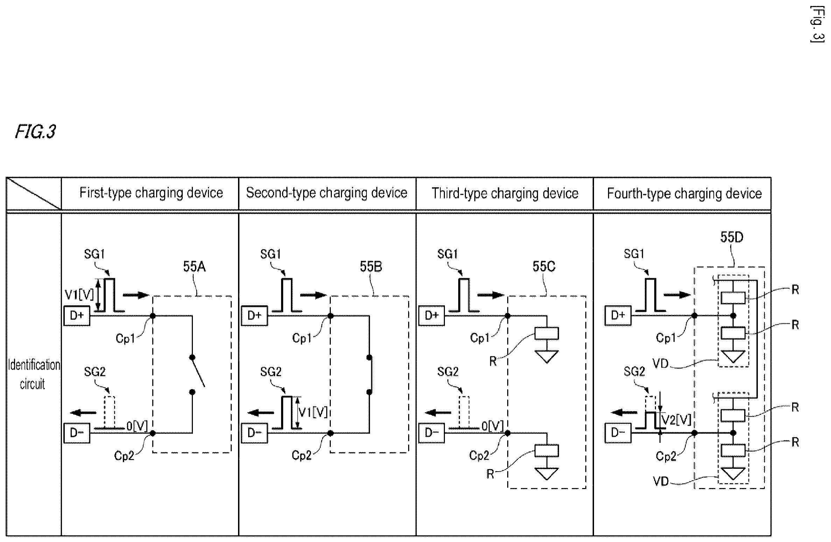

The identification circuit 55 has a circuit configuration commensurate with the type of charging device 50 which comprises said identification circuit 55, although this will be described in detail later with the aid of fig. 3. Therefore, if a predetermined electrical signal (also referred to below as an "input signal SG1") is input to one end of the identification circuit 55, an electrical signal (also referred to below as an "output signal SG2") commensurate with the circuit configuration of the identification circuit 55 (in other words, the type of charging device 50) will be output from another end of the identification circuit 55.

The plug 52 has a predetermined shape and comprises a plurality of terminals. A USB Type-C (USB: universal serial bus; registered trademark) plug is an example of the plug 52, but this is not limiting. For example, the plug 52 may be a plug such as a Micro USB or Lightning (registered trademark).

In this embodiment, the plug 52 comprises a VBUS terminal, a GND terminal, a D+ terminal, and a D- terminal, as the plurality of terminals. The VBUS terminal of the plug 52 is an output terminal from which the supply power P generated by means of the charging device main body 51 is output. The GND terminal of the plug 52 is a ground terminal connected to a power line of the charging system 10 having the reference potential. The D+ terminal of the plug 52 is an input terminal which is connected to one end of the identification circuit 55 and receives the input signal SG1 from a receptacle 101 (i.e., the inhalation device 100) side, which will be described later. The D- terminal of the plug 52 is an output terminal which is connected to the other end of the identification circuit 55 and outputs the output signal SG2 to the receptacle 101 side. Moreover, the D+ terminal of the plug 52 may also function as an output terminal, and the D- terminal may similarly also function as an input terminal. Furthermore, the plug 52 may further comprise other terminals.

The inhalation device 100 comprises the receptacle 101. The receptacle 101 is configured to enable insertion of the plug 52 of the charging device 50, and is configured to be capable of receiving power from the inserted plug 52. As an example, when the plug 52 is a USB Type-C plug, the receptacle 101 may be a USB Type-C receptacle.

The receptacle 101 comprises a plurality of terminals. In this embodiment, similarly to the plug 52, the receptacle 101 comprises a VBUS terminal, a GND terminal, a D+ terminal, and a D- terminal, as the plurality of terminals.

The VBUS terminal of the receptacle 101 is an input terminal which is connected to the VBUS terminal of the plug 52 when the plug 52 is inserted in the receptacle 101, and receives the supply power P output from the VBUS terminal of the plug 52. The GND terminal of the receptacle 101 is a ground terminal connected to a power line of the charging system 10 having the reference potential. The D+ terminal of the receptacle 101 is an output terminal which is connected to the D+ terminal of the plug 52 when the plug 52 is inserted in the receptacle 101, and outputs the input signal SG1 to the plug 52 (i.e., charging device 50) side. The D- terminal of the receptacle 101 is an input terminal which is connected to the D- terminal of the plug 52 when the plug 52 is inserted in the receptacle 101, and receives the output signal SG2 from the plug 52 side. Moreover, the D+ terminal of the receptacle 101 may also function as an input terminal, and the D- terminal may similarly also function as an output terminal. Furthermore, the receptacle 101 may further comprise other terminals.

The inhalation device 100 is configured to be capable of implementing charging of the power source unit 111 with power received via the receptacle 101, and power supply to the heating unit 121 using power of the power source unit 111. The inhalation device 100 may further be configured to be capable of supplying the heating unit 121 with power received via the receptacle 101.

In this embodiment, the inhalation device 100 further comprises: a charging IC 102 (IC: integrated circuit), a DC/DC converter 103 (DC: direct current), and the MCU 105. Note that the charging IC 102 and the MCU 105 constitute the control unit 116 described above, as shown in fig. 2, for example.

The charging IC 102 is electrically provided between the receptacle 101 and the power source unit 111, and between the power source unit 111 and a predetermined supply destination. The charging IC 102 then charges the power source unit 111 with power received via the receptacle 101 (more specifically, the VBUS terminal of the receptacle 101), and supplies the power of the power source unit 111 and the power received via the receptacle 101 to the predetermined supply destination, in accordance with control performed by the MCU 105. Examples of power supply destinations which may be cited include the DC/DC converter 103 and the MCU 105, etc.

Furthermore, in the embodiment, the charging IC 102 is configured to be capable of setting the current value of the charging current during charging of the power source unit 111 at a predetermined value of I1 or I2, and selects I1 or I2 in accordance with an instruction from the MCU 105. Here, I1 is a relatively large current value which may be 2.4 [A], for example. Meanwhile, I2 is a smaller current value than I1, and may be 1 [A], for example. Furthermore, the charging IC 102 may or may not supply power to a predetermined supply destination (e.g., the DC/DC converter 103), in accordance with control performed by the MCU 105.

The DC/DC converter 103 boosts the output voltage of the power source unit 111, and is configured to be capable of supplying the heating unit 121 with a heating voltage Vheat obtained by means of this boost, in accordance with control performed by the MCU 105. In other words, the power source unit 111 is capable of supplying power to the heating unit 121 via the DC/DC converter 103.

As an example, the DC/DC converter 103 does or does not supply the heating voltage Vheat to the heating unit 121 in accordance with control performed by the MCU 105. Furthermore, the DC/DC converter 103 may be configured to generate a heating voltage Vheat having a voltage value designated by the MCU 105. In addition, the DC/DC converter 103 may be configured to supply the heating unit 121 with power having a current value designated by the MCU 105.

The MCU 105 is mainly configured by a processor for implementing various types of arithmetic processing, and controls predetermined controlled components within the inhalation device 100 in accordance with a pre-prepared program. Examples of controlled components controlled by means of the MCU 105 which may be cited include the abovementioned charging IC 102 and DC/DC converter 103, etc.

Furthermore, the MCU 105 is configured to be capable of identifying the type of charging device 50 comprising the plug 52 when said plug 52 has been inserted into the receptacle 101.

In this embodiment, the MCU 105 comprises an IO1 terminal, an IO2 terminal, and an AD2 terminal as terminals electrically connecting the inside and outside of the MCU 105. The IO1 terminal of the MCU 105 is an output terminal provided to output the input signal SG1 from the MCU 105, and is connected to the D+ terminal of the receptacle 101. The IO2 terminal and the AD2 terminal of the MCU 105 are input terminals provided to input the output signal SG2 to the MCU 105, and are connected to the D- terminal of the receptacle 101.

More specifically, the IO2 terminal is a digital input terminal, and the MCU 105 is configured to be capable of detecting whether the input voltage to the IO2 terminal is at a high level (in other words, equal to or greater than a threshold), or at a low level (in other words, less than the threshold). Meanwhile, the AD2 terminal is an analog input terminal, and the MCU 105 is configured to be capable of detecting the voltage value of the input voltage to the AD2 terminal.

Furthermore, the IO1 terminal may also function as a digital input terminal, similarly to the IO2 terminal. In that case, the MCU 105 is configured to be capable of detecting whether the input voltage to the IO1 terminal is at a high level or a low level. As shown in fig. 2, the MCU 105 may further comprise an AD1 terminal which is an analog input terminal connected to the D+ terminal of the receptacle 101, and may be configured to be capable of detecting the voltage value of the input voltage to the AD1 terminal. Furthermore, the IO2 terminal may also function as an output terminal similarly to the IO1 terminal.

When the plug 52 is inserted in the receptacle 101, the IO1 terminal (and AD1 terminal) of the MCU 105 is (are) connected to one end of the identification circuit 55 via the D+ terminal of the receptacle 101 and the D+ terminal of the plug 52. Furthermore, the IO2 terminal and the AD2 terminal of the MCU 105 are connected to the other end of the identification circuit 55 via the D- terminal of the receptacle 101 and the D- terminal of the plug 52. When the input signal SG1 is input at one end, the identification circuit 55 then outputs, from the other end, an output signal SG2 commensurate with the circuit configuration of the identification circuit 55 (in other words, the type of charging device 50).

The MCU 105 therefore outputs the input signal SG1 from the IO1 terminal, whereby the input signal SG1 is input to one end of the identification circuit 55, the output signal SG2 output from the other end of the identification circuit 55 is received by the IO2 terminal or the AD2 terminal, and it is thereby possible to identify the type of charging device 50 based on the output signal SG2.

As one example, identification information (not depicted) defining the output signal SG2 corresponding to each type of charging device 50 is prestored in the MCU 105 by the manufacturer of the inhalation device 100. The MCU 105 then identifies the type of charging device 50 from the output signal SG2 which is actually received, by referring to this identification information.

### 3. Identification circuit

Fig. 3 is a diagram showing an example of a circuit configuration of the identification circuit 55 provided in each type of charging device 50. In this embodiment, as shown in fig. 3, the charging devices 50 which may be present include: a first-type charging device 50, a second-type charging device 50, a third-type charging device 50, and a fourth-type charging device 50.

Furthermore, in this embodiment, it will be assumed that a genuine charging device 50 provided to the user by the manufacturer of the inhalation device 100 is a second-type charging device 50. The manufacturer of the inhalation device 100 then pre-checks that there are no quality problems with the second-type charging device 50 even if it is caused to output a large current. In this embodiment, the second-type charging device 50 may be treated as a charging device 50 capable of outputting a large current.

Meanwhile, in this embodiment, it will be assumed that the first-type charging device 50, third-type charging device 50, and fourth-type charging device 50 are charging devices 50 manufactured by a third party other than the manufacturer of the inhalation device 100, for which no quality checks have been made by the manufacturer of the inhalation device 100. In this embodiment, it will therefore be assumed that the charging devices 50 for which no quality checks have been made, which is those other than the second-type charging device 50, are charging devices 50 from which it is difficult to output a large current from a safety perspective.

The first-type charging device 50 comprises an identification circuit 55A shown in fig. 3 as the identification circuit 55. The identification circuit 55A has a circuit configuration in which one end Cp1 connected to the D+ terminal of the plug 52, and another end Cp2 connected to the D- terminal of the plug 52 are electrically isolated.

In this embodiment, the MCU 105 outputs a V1 [V] pulse signal from the IO1 terminal as the input signal SG1. The identification circuit 55A has a circuit configuration in which one end Cp1 and the other end Cp2 are isolated, so even if the input signal SG1 which is a V1 [V] pulse signal is input to said one end Cp1, the output signal SG2 output from the other end Cp2 will be 0 [V].

The second-type charging device 50 comprises an identification circuit 55B shown in fig. 3 as the identification circuit 55. The identification circuit 55B has a circuit configuration in which one end Cp1 and the other end Cp2 are connected in that state without a resistor or the like therebetween. If the input signal SG1 which is a V1 [V] pulse signal is input to said one end Cp1, this pulse signal will therefore be output unchanged from the other end Cp2 as the output signal SG2.

The third-type charging device 50 comprises an identification circuit 55C shown in fig. 3 as the identification circuit 55. The identification circuit 55C has a circuit configuration in which one end Cp1 and the other end Cp2 are each grounded via a predetermined resistor R. Even if the input signal SG1 which is a V1 [V] pulse signal is input to said one end Cp1, the output signal SG2 output from the other end Cp2 will be 0 [V].

The fourth-type charging device 50 comprises an identification circuit 55D shown in fig. 3 as the identification circuit 55. The identification circuit 55D has a circuit configuration in which one end Cp1 and the other end Cp2 are each connected via a voltage divider circuit VD. If the input signal SG1 which is a V1 [V] pulse signal is input to said one end Cp1, this pulse signal will therefore be voltage-divided by the voltage divider circuit VD, whereby a V2 [V] pulse signal will be output from the other end Cp2 as the output signal SG2. Here, V2 [V] is a smaller voltage than V1 [V]. As an example, when the electrical resistance values of the resistors R constituting the voltage divider circuits VD are equal, V2 [V] is 1/2 of V1 [V].

### 4. Example of control of inhalation device by means of control unit

### 4-1. Control relating to charging of power source unit 111

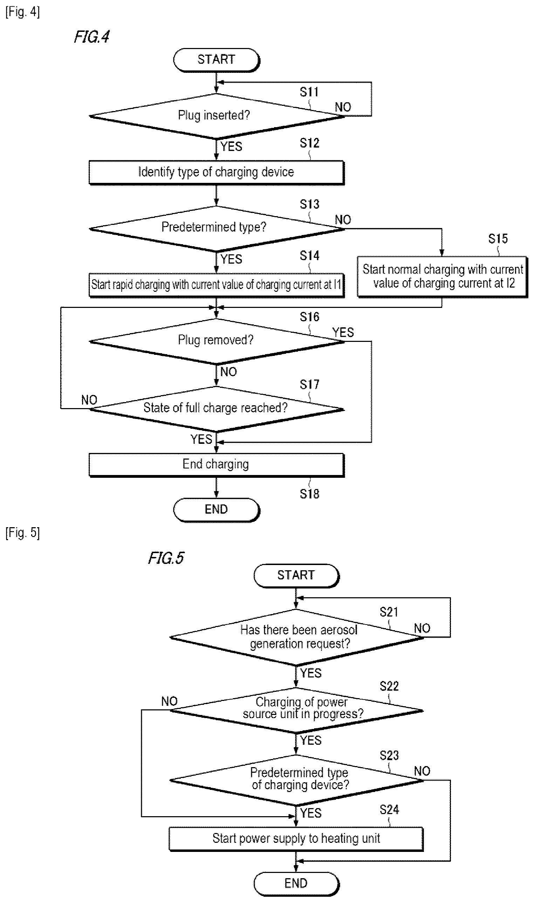

Fig. 4 is a flowchart showing an example of control performed by the control unit 116 in relation to charging of the power source unit 111. As shown in fig. 4, the control unit 116 (e.g., the MCU 105) determines whether or not the plug 52 has been inserted into the receptacle 101 (step S11). For example, the control unit 116 may determine whether or not the plug 52 has been inserted into the receptacle 101 by monitoring input to the VBUS terminal of the receptacle 101.

If it is determined that the plug 52 is not inserted in the receptacle 101 (step S11: NO), the control unit 116 repeats the processing of step S11. If it is determined that the plug 52 is inserted in the receptacle 101 (step S11: YES), the control unit 116 identifies the type of charging device 50 comprising the plug 52 inserted in the receptacle 101 (step S12).

Next, the control unit 116 determines whether or not the charging device 50 obtained as the identification result from the processing of step S12 is of a predetermined type (step S13). As described above, in this embodiment, the second-type charging device 50 is assumed to be a charging device 50 capable of outputting a large current. In the processing of step S13, the control unit 116 therefore determines whether or not the charging device 50 is of the second type.

If it is determined that the charging device 50 is of the predetermined type (the second type here) (step S13: YES), the control unit 116 starts rapid charging of the power source unit 111 with a current value of the charging current at I1 (e.g., 2.4 [A]) (step S14).

Meanwhile, if it is determined that the charging device 50 is not of the predetermined type (step S13: NO), the control unit 116 starts normal charging of the power source unit 111 with a current value of the charging current at I2 (e.g., 1 [A]) (step S15).

Next, the control unit 116 determines whether or not the plug 52 has been removed from the receptacle 101 (step S16). If it is determined that the plug 52 has been removed from the receptacle 101 (step S16: YES), the control unit 116 advances to the processing of step S18 which will be described below. If it is determined that the plug 52 has not been removed from the receptacle 101 (step S16: NO), the control unit 116 determines whether or not the power source unit 111 is in a state of full charge (step S17).

If it is determined that the power source unit 111 is not in a state of full charge (step S17: NO), the control unit 116 returns to the processing of step S16. If it is determined that the power source unit 111 is in a state of full charge (step S17: YES), the control unit 116 ends charging of the power source unit 111 (step S18) and terminates the processing series shown in fig. 4.

### 4-2. Control relating to aerosol generation

Fig. 5 is a flowchart showing an example of control performed by the control unit 116 in relation to aerosol generation. For example, the control unit 116 implements the processing series shown in fig. 5 in parallel with the processing series shown in fig. 4.

As shown in fig. 5, the control unit 116 (e.g., the MCU 105) determines whether or not there has been an aerosol generation request from the user (step S21). The aerosol generation request may be an operation to instruct the start of heating (also referred to below as a "heating start operation"), for example. As an example, the heating start operation may be pressing of a predetermined operation button (not depicted) provided on the inhalation device 100. As another example, the heating start operation may be insertion of the stick-type substrate 150 into the inhalation device 100, or drawing on the inhalation device 100. Furthermore, the aerosol generation request is not limited to direct operation on the inhalation device 100, and may be, for example, reception of predetermined information from another device capable of communicating with the inhalation device 100, such as a smartphone. The control unit 116 may detect the aerosol generation request based on information acquired by means of the sensor unit 112 or the communication unit 115, for example.

If it is determined that there is no aerosol generation request (step S21: NO), the control unit 116 repeats the processing of step S21. If it is determined that there has been an aerosol generation request (step S21: YES), the control unit 116 determines whether or not charging of the power source unit 111 is in progress (step S22). If it is determined that charging of the power source unit 111 is not in progress (step S22: NO), the control unit 116 advances to the processing of step S24 which will be described below.

If it is determined that charging of the power source unit 111 is in progress (step S22: YES), the control unit 116 determines whether or not the charging device 50 is of the predetermined type (step S23) by referring to the type of charging device 50 obtained as the most recent identification result from the processing of step S12. In the processing of step S23, the control unit 116 determines whether or not the charging device 50 is of the second type in the same way as in the processing of step S13, for example.

If it is determined that the charging device 50 is of the predetermined type (the second type here) (step S23: YES), the control unit 116 starts power supply to the heating unit 121 (step S24) to cause aerosol generation by means of the heating unit 121, and terminates the processing series shown in fig. 5. Meanwhile, if it is determined that the charging device 50 is not of the predetermined type (step S23: NO), the control unit 116 terminates the processing series shown in fig. 5 without further processing. An aerosol is not generated in this case.

As described above, the inhalation device 100 comprises: the power source unit 111 configured to be capable of supplying power to the heating unit 121; the receptacle 101 which is configured to enable insertion of the plug 52 of the charging device 50 and receives power from the inserted plug 52; and the control unit 116 configured to be capable of controlling power supply to the heating unit 121. The control unit 116 then identifies the type of charging device 50 comprising the plug 52 when said plug 52 has been inserted into the receptacle 101, and controls power supply to the heating unit 121 based on the result of identifying the type of charging device 50 if there is an aerosol generation request from the user while the power source unit 111 is being charged with power received via the receptacle 101. This enables power supply to the heating unit 121 to be appropriately controlled while taking account of the type of charging device 50, even while charging of the power source unit 111 is in progress.

For example, the control unit 116 is configured to supply power to the heating unit 121 when the type of charging device 50 obtained as the identification result is the predetermined type (the second type in the example described above). Meanwhile, the control unit 116 is configured not to supply power to the heating unit 121 when the type of charging device 50 obtained as the identification result is another type. As a result, when a charging device 50 of the predetermined type which is capable of outputting a large current is used, the heating unit 121 can also be supplied with power while charging of the power source unit 111 is in progress, enabling the user to inhale the aerosol and improving convenience. Meanwhile, when a charging device 50 of another type from which it is difficult to output a large current is used, application of an excessive load to the charging device 50 is restricted by not supplying power to the heating unit 121 while charging of the power source unit 111 is in progress, thereby improving safety.

It should be noted that, in the example described above, the control unit 116 was configured not to supply power to the heating unit 121 when the type of charging device 50 obtained as the identification result is another type, but this is not limiting.

For example, the control unit 116 may be configured to supply the heating unit 121 with relatively large first power when the type of charging device 50 obtained as the identification result is the predetermined type (e.g., the second type). Meanwhile, the control unit 116 may be configured to supply the heating unit 121 with second power smaller than the first power when the type of charging device 50 obtained as the identification result is another type. In this way also, when a charging device 50 of the predetermined type which is capable of outputting a large current is used, the heating unit 121 may also be supplied with the relatively large first power while charging of the power source unit 111 is in progress, so that an aerosol can be quickly generated by the heating unit 121, thereby improving convenience. Meanwhile, when a charging device 50 of the second type from which it is difficult to output a large current is used, the heating unit 121 is supplied with the relatively small second power to thereby restrict application of an excessive load to the charging device 50 while the user is still able to inhale the aerosol, which improves safety.

More specifically, when the type of charging device 50 obtained as the identification result is the predetermined type, the control unit 116 may cause the DC/DC converter 103 to generate a first voltage (e.g., 5 [V]) as the heating voltage Vheat, and may supply the heating unit 121 with the first power based on the first voltage. Meanwhile, when the type of charging device 50 obtained as the identification result is another type, the control unit 116 may cause the DC/DC converter 103 to generate a second voltage (e.g., 4.5 [V]) which is lower than the first voltage as the heating voltage Vheat, and may supply the heating unit 121 with the second power based on the second voltage. As a result, when a charging device 50 of the predetermined type which is capable of outputting a large current is used, the heating unit 121 may be supplied with the first power based on the relatively high first voltage generated by means of the DC/DC converter 103, thereby improving convenience. Meanwhile, when a charging device 50 of another type from which it is difficult to output a large current is used, the heating unit 121 is supplied with the second power based on the relatively low second voltage generated by means of the DC/DC converter 103 while charging of the power source unit 111 is in progress, thereby restricting application of an excessive load to the charging device 50 and improving safety.

Furthermore, the control unit 116 may further be configured to be capable of controlling charging of the power source unit 111, and may control charging of the power source unit 111 based on the result of identifying the type of charging device 50. This enables charging of the power source to be appropriately controlled while taking account of the type of charging device.

For example, when the type of charging device 50 obtained as the identification result is the predetermined type (the second type in the example described above), the control unit 116 performs rapid charging of the power source unit 111 by setting the current value of the charging current during charging of the power source unit 111 at I1 (e.g., 2.4 [A]). Meanwhile, when the type of charging device 50 obtained as the identification result is another type, the control unit 116 performs normal charging of the power source unit 111 by setting the current value of the charging current during charging of the power source unit 111 at I2 (e.g., 1 [A]) which is smaller than I1. This enables rapid charging of the power source unit 111 using a large current when a charging device 50 of the predetermined type which is capable of outputting a large current is used. Meanwhile, when a charging device 50 of another type from which it is difficult to output a large current is used, application of an excessive load to the charging device 50 is restricted by limiting the charging current, thereby improving safety.

Furthermore, the control unit 116 comprises: the IO1 terminal connected to one end Cp1 of the identification circuit 55 of the charging device 50 comprising the plug 52 inserted in the receptacle 101; and the IO2 terminal or AD2 terminal connected to the other end Cp2 of the identification circuit 55, and identifies the type of charging device 50 based on input to the IO2 terminal or AD2 terminal when the predetermined input signal SG1 was output from the IO1 terminal. This enables the type of charging device 50 to be accurately identified using a simple configuration.

It should be noted that the IO2 terminal and the AD2 terminal were provided as input terminals of the MCU 105 in the example described above, but this is not limiting. For example, the IO2 terminal may be omitted from the IO2 terminal and the AD2 terminal. Even if the IO2 terminal is omitted, the MCU 105 can still identify the type of charging device 50 based on the input voltage to the AD2 terminal when the input signal SG1 was output from the IO1 terminal. As another example, if the procedure is such that the MCU 105 should be able to identify whether the charging device 50 is of the first type or the third type, or else whether the charging device 50 is of the second type or fourth type, then the AD2 terminal may be omitted from the IO2 terminal and the AD2 terminal.

Furthermore, the content of control performed by the control unit 116 when the type of charging device 50 obtained as the identification result is not the second type, i.e. the first type, third type or fourth type, was the same in the example described above, but this is not limiting.

For example, the control unit 116 (e.g., the MCU 105) may cause the inhalation device 100 to operate based on the type of charging device 50 obtained as the identification result by referring to settings information defining operations of the inhalation device 100 corresponding to each type of charging device 50.

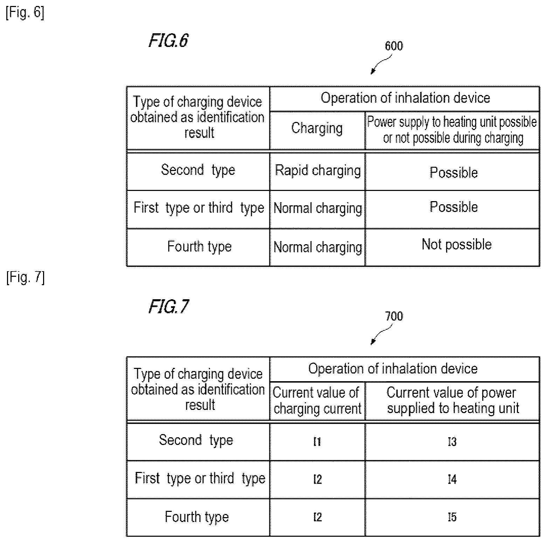

Fig. 6 is a diagram showing an example of settings information defining operations of the inhalation device 100 corresponding to each type of charging device 50. Settings information 600 shown in fig. 6 is prestored in the memory unit 114, etc. by the manufacturer of the inhalation device 100, for example.

In the settings information 600 of this example, as shown in fig. 6, operations of the inhalation device 100 when the type of charging device 50 obtained as the identification result is the second type are defined as: "rapid charging" and "power supply to heating unit 121 possible during charging". Furthermore, operations of the inhalation device 100 when the type of charging device 50 obtained as the identification result is the first type or third type are defined as: "normal charging" and "power supply to heating unit 121 possible during charging". Operations of the inhalation device 100 when the type of charging device 50 obtained as the identification result is the fourth type are then: "normal charging" and "power supply to the heating unit 121 not possible during charging".

Accordingly, in the case of this example, the control unit 116 (e.g., the MCU 105) may perform rapid charging of the power source unit 111 and also supply power to the heating unit 121 during charging of the power source unit 111 if the type of charging device 50 obtained as the identification result is the second type. Furthermore, the control unit 116 may perform normal charging (not rapid charging, in other words) of the power source unit 111 and also supply power to the heating unit 121 during charging of the power source unit 111 if the type of charging device 50 obtained as the identification result is the first type or third type. The control unit 116 may then perform normal charging of the power source unit 111 without supplying power to the heating unit 121 during charging of the power source unit 111 if the type of charging device 50 obtained as the identification result is the fourth type.

The control unit 116 is thus capable of appropriately operating the inhalation device 100 while taking account of the type of charging device 50 by causing the inhalation device 100 to operate based on the type of charging device 50 obtained as the identification result, thereby improving safety while also improving convenience.

Furthermore, if there is an aerosol generation request while the power source unit 111 is being charged with power received via the receptacle 101, the control unit 116 may determine the current value of power supplied to the heating unit 121 and the current value of the charging current during charging of the power source unit 111 based on the result of identifying the type of charging device 50, and may control power supply to the heating unit 121 and charging of the power source unit 111 based on the current values determined.

Fig. 7 is a diagram showing another example of settings information defining operations of the inhalation device 100 corresponding to each type of charging device 50. Settings information 700 shown in fig. 7 is prestored in the memory unit 114, etc. by the manufacturer of the inhalation device 100, for example.

In the settings information 700 of this example, as shown in fig. 7, operations of the inhalation device 100 when the type of charging device 50 obtained as the identification result is the second type are defined as: current value of charging current "I1" and current value of power supplied to heating unit 121 "I3". Furthermore, operations of the inhalation device 100 when the type of charging device 50 obtained as the identification result is the first type or third type are defined as: current value of charging current "I2" and current value of power supplied to heating unit 121 "I4 (e.g., I4<I3)". Operations of the inhalation device 100 when the type of charging device 50 obtained as the identification result is the fourth type are then defined as: current value of charging current "I2" and current value of power supplied to heating unit 121 "I5 (e.g., I5<I4)".

Accordingly, in the case of this example, the control unit 116 (e.g., the MCU 105) determines "I1" as the current value of the charging current during charging of the power source unit 111 and controls charging of the power source unit 111 based on this current value (i.e., I1) if the type of charging device 50 obtained as the identification result is the second type. In addition, if there is an aerosol generation request during charging of the power source unit 111, the control unit 116 determines "I3" as the current value of power supplied to the heating unit 121 from the power received via the receptacle 101, and controls power supply to the heating unit 121 based on this current value (i.e., I3).

Furthermore, the control unit 116 determines "I2" as the current value of the charging current during charging of the power source unit 111 and controls charging of the power source unit 111 based on this current value (i.e., I2) if the type of charging device 50 obtained as the identification result is the first type or third type. In addition, if there is an aerosol generation request during charging of the power source unit 111, the control unit 116 determines "I4" as the current value of power supplied to the heating unit 121 from the power received via the receptacle 101, and controls power supply to the heating unit 121 based on this current value (i.e., I4).

Furthermore, the control unit 116 determines "I2" as the current value of the charging current during charging of the power source unit 111 and controls charging of the power source unit 111 based on this current value (i.e., I2) if the type of charging device 50 obtained as the identification result is the fourth type. In addition, if there is an aerosol generation request during charging of the power source unit 111, the control unit 116 determines "I5" as the current value of power supplied to the heating unit 121 from the power received via the receptacle 101, and controls power supply to the heating unit 121 based on this current value (i.e., I5).

The control unit 116 thus determines the current value of power supplied to the heating unit 121 and the current value of the charging current during charging of the power source unit 111 based on the result of identifying the type of charging device 50, and controls power supply to the heating unit 121 and charging of the power source unit 111 based on the current values determined, thereby enabling power supply to the heating unit 121 and charging of the power source unit 111 at suitable current values that take account of the type of charging device 50, which improves safety while also improving convenience.

Furthermore, the control unit 116 may also supply power from the power source unit 111 to the heating unit 121 at a current value commensurate with the state of charge (SOC) of the power source unit 111 when the heating unit 121 is supplied with some of the power received via the receptacle 101, as described above. In this case, the control unit 116 may control the current values so that a distribution ratio of the current value of power supplied to the heating unit 121 from power received via the receptacle 101 and the current value of power from the power source unit 111 to the heating unit 121 is a predetermined value established in advance in accordance with the type of charging device 50 and the state of charge of the power source unit 111.

It is also feasible for there to be a temporary drop in quality of the input signal SG1 input to the identification circuit 55 or the output signal SG2 input to the MCU 105 due to the effects of noise, etc., for example. When this kind of drop in quality of the input signal SG1 or the output signal SG2 occurs, there may also be a drop in the accuracy of identification results obtained on the basis of the output signal SG2.

In the processing of step S12, the control unit 116 (e.g., the MCU 105) may therefore perform, multiple times, output of the input signal SG1 and acquisition of the output signal SG2 obtained from output of the input signal SG1, and thereby identify the type of charging device 50 based on multiple output signals SG2. Furthermore, at this point, the control unit 116 may also perform, multiple times, output of the input signal SG1 and acquisition of the output signal SG2 obtained from output of the input signal SG1 while varying the terminal which outputs the input signal SG1 and the terminal which receives the output signal SG2.

As an example, the control unit 116 acquires each of: input to the IO2 terminal or the AD2 terminal when the input signal SG1 was output from the IO1 terminal, and input to the IO1 terminal or the AD1 terminal when the input signal SG1 was output from the IO2 terminal, and identifies the type of charging device 50 based on the acquired input to the IO2 terminal, etc. and input to the IO1 terminal, etc.

For example, the control unit 116 identifies the type of charging device 50 based on the input to the IO2 terminal, etc. and/or the input to the IO1 terminal, etc. if the acquired input to the IO2 terminal, etc. and input to the IO1 terminal, etc. are matching. Meanwhile, the control unit 116 once again acquires each of the input to the IO2 terminal, etc. when the input signal SG1 was output from the IO1 terminal, and the input to the IO1 terminal, etc. when the input signal SG1 was output from the IO2 terminal, if the acquired input to the IO2 terminal, etc. and input to the IO1 terminal, etc. are not matching.

In this way, output of the input signal SG1 and acquisition of the output signal SG2 obtained from output of the input signal SG1 are performed multiple times, and the type of charging device 50 is identified based on the multiple output signals SG2, thereby enabling the type of charging device 50 to be identified more accurately even if there is a temporary drop in quality of the input signal SG1 or the output signal SG2 due to the effects of noise, etc.

In addition, it is also possible to identify more types of charging devices 50 by performing, multiple times, output of the input signal SG1 and acquisition of the output signal SG2 obtained from output of the input signal SG1 while varying the terminal which outputs the input signal SG1 and the terminal which receives the output signal SG2.

For example, it is also feasible for there to be charging devices 50 of the type in which the identification circuit 55 includes a diode permitting a flow of current only from said one end Cp1 side to the other end Cp2 side, or a diode permitting a flow of current only from the other end Cp2 side to said one end Cp1 side. It is therefore possible to also identify whether the charging device 50 is of the type which includes such a diode in the identification circuit 55, by performing, multiple times, output of the input signal SG1 and acquisition of the output signal SG2 obtained from output of the input signal SG1 while varying the terminal which outputs the input signal SG1 and the terminal which receives the output signal SG2.

Furthermore, in the example described above, the control unit 116 was configured to identify the type of charging device 50 based on input to the IO2 terminal, etc. (the D- terminal of the receptacle 101, in other words) when the input signal SG1 was output from the IO1 terminal, etc. (the D+ terminal of the receptacle 101, in other words), but this is not limiting.

For example, the control unit 116 may also apply a predetermined load to a connected charging device 50 and identify the type of charging device 50 based on how the supply power P from the charging device 50 changes as a result.

To describe this more specifically, for example, when the plug 52 is inserted in the receptacle 101, the control unit 116 first of all tries to output a predetermined current from the charging device 50 by, for instance, supplying the heating unit 121 and the power source unit 111 with power received via the receptacle 101. A predetermined load is applied to the charging device 50 as a result. The control unit 116 then identifies the type of charging device 50 based on an amount of a voltage drop in the supply power P when the predetermined load was applied to the charging device 50 in this way (for example, an amount of a voltage drop at the VBUS terminal of the receptacle 101).

To describe this in further detail, when the plug 52 is inserted in the receptacle 101, the control unit 116 supplies the heating unit 121 with power received via the receptacle 101 by performing control in the same way as when an aerosol is generated, while also supplying this power to the power source unit 111 for charging. At this time, for example, the control unit 116 may increase, stepwise, the current value of the power supplied to the heating unit 121 and/or the power source unit 111 to thereby increase, stepwise, the current supplied to the inhalation device 100 by the charging device 50 (this current will also be referred to below as the "applied current"). The control unit 116 then measures the voltage at the VBUS terminal of the receptacle 101 corresponding to each applied voltage, and identifies the type of charging device 50 based on measured values thereof.

For example, if the voltage drop at the VBUS terminal when the applied current is 1.5 [A] is a predetermined value (e.g., 0.5 [V]) or less), the control unit 116 may identify the connected charging device 50 as a genuine charging device 50 (e.g., a second-type charging device 50), and may permit rapid charging of the power source unit 111 and power supply to the heating unit 121 during charging.

A description will be given of an example in which a genuine charging device 50 is able to supply a stable current if the output current is 1.5 [A] or less, for example, and current output is stopped by a predetermined safety circuit to prevent heat generation if the output current reaches around 1.7-2.0 [A]. By utilizing such characteristics of a genuine charging device 50, the control unit 116 may identify the connected charging device 50 as a genuine charging device 50 if the voltage drop at the VBUS terminal is 0.5 [A] or less when the applied current is 1.5 [A], as described above. Furthermore, in order to further improve the accuracy in identifying the type of charging device 50 in this case, the control unit 116 may identify the connected charging device 50 as a genuine charging device 50 if the voltage drop at the VBUS terminal is 0.5 [A] or less when the applied current is 1.5 [A] and if the voltage drop at the VBUS terminal is greater than 0.5 [A] when the applied current is 2 [A].

That is to say, current output is stopped by a safety circuit if there is an attempt to output a current at or above a predetermined value in the genuine charging device 50 of the example described above, so the current no longer flows from the charging device 50 to the inhalation device 100. A voltage drop therefore occurs at the VBUS terminal of the receptacle 101 according to the magnitude of the applied current in the genuine charging device 50. Furthermore, if the charging device 50 comprises a safety circuit, then even if it is not a genuine charging device 50, a voltage drop will occur in the same way at the VBUS terminal of the receptacle 101 according to the magnitude of the applied voltage. The control unit 116 is therefore capable of roughly identifying what level of output current is compatible with the charging device 50 according to what kind of voltage drop occurs at the VBUS terminal of the receptacle 101 when the applied current is at a given magnitude. Based on the identification result, the control unit 116 is then capable of determining the current value of the applied current thereafter.

Moreover, there are also charging devices 50 without a safety circuit, but if a large voltage drop at or above a predetermined value occurs at the VBUS terminal of the receptacle 101 with such a charging device 50, there is a possibility of abnormal heat generation in the circuit, so it is preferable to restrict or stop the supply power P by ensuring that rapid charging, etc. is not performed. Accordingly, whether or not the charging device 50 has a safety circuit, the control unit 116 may apply a predetermined load to the connected charging device 50 and control charging or power supply to the heating unit 121 during charging based on how the supply power P from the charging device 50 changes as a result of the load being applied.

As described above, the control unit 116 may identify the type of charging device 50 comprising the plug 52 inserted in the receptacle 101 based on the voltage of the supply power P from the charging device 50 when a predetermined current has been output from the charging device 50. This enables the control unit 116 (e.g., the MCU 105) to identify the type of charging device 50, even if the control unit 116 does not comprise the abovementioned IO1 terminal, etc. The control unit 116 can therefore identify the type of charging device 50 with a simpler configuration.

Furthermore, the control unit 116 may identify the type of charging device 50 based on both input to the IO2 terminal, etc. when the input signal SG1 was output from the IO1 terminal, etc., and the change in supply power P when a predetermined load was applied to the charging device 50. In this case, the control unit 116 may identify the connected charging device 50 as a genuine charging device 50 when both input to the IO2 terminal, etc. when the input signal SG1 was output from the IO1 terminal, etc., and the change in supply power P when a predetermined load was applied to the charging device 50 satisfy predetermined conditions.

As an example, the control unit 116 may identify the connected charging device 50 as a genuine charging device 50 if the input to the IO2 terminal, etc. obtained from output of a V1 [V] pulse signal corresponds to said pulse signal, and if the voltage drop at the VBUS terminal is a predetermined value (e.g., 0.5 [V]) or less when the applied current is 1.5 [A].

### 5. Variant example of inhalation device

A variant example of the inhalation device 100 will be described next.

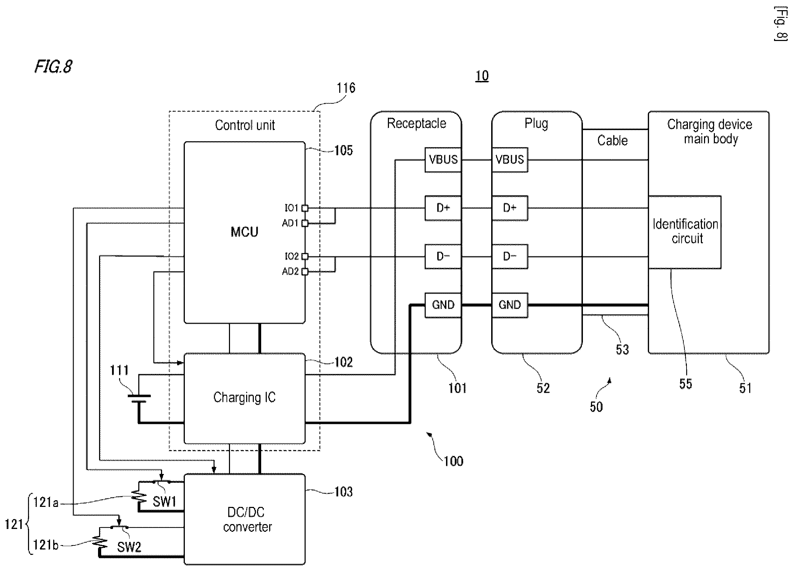

Fig. 8 is a diagram showing a variant example of the inhalation device 100. The description here will focus on differences from the example shown in fig. 2, and the description of elements which are common to the example shown in fig. 2 will be omitted or simplified, as appropriate.

As shown in fig. 8, the inhalation device 100 of this example comprises a first heating resistor 121a and a second heating resistor 121b as the heating unit 121. In other words, the heating unit 121 of this example comprises the first heating resistor 121a and the second heating resistor 121b. Here, the first heating resistor 121a has a smaller electrical resistance value than the second heating resistor 121b.

Furthermore, the inhalation device 100 of this example comprises, between the first heating resistor 121a and the DC/DC converter 103, a first switch SW1 for turning the power supply from the DC/DC converter 103 to the first heating resistor 121a on/off. The first switch SW1 operates in accordance with control performed by the MCU 105 (i.e., the control unit 116) to turn the power supply to the first heating resistor 121a on/off. The first switch SW1 is realized by a MOSFET (metal-oxide-semiconductor field effect transistor) or a bipolar transistor, etc.

The inhalation device 100 of this example further comprises, between the second heating resistor 121b and the DC/DC converter 103, a second switch SW2 for turning the power supply from the DC/DC converter 103 to the second heating resistor 121b on/off. The second switch SW2 operates in accordance with control performed by the MCU 105 to turn the power supply to the second heating resistor 121b on/off. The second switch SW2 is realized by a MOSFET or a bipolar transistor, etc.

For example, when the type of charging device 50 obtained as the identification result is a predetermined type (e.g., the second type), the MCU 105 serving as the control unit 116 supplies power to the first heating resistor 121a of the heating unit 121 by turning the first switch SW1 on and turning the second switch SW2 off. Meanwhile, when the type of charging device 50 obtained as the identification result is another type, the MCU 105 serving as the control unit 116 supplies power to the second heating resistor 121b of the heating unit 121 by turning the first switch SW1 off and turning the second switch SW2 on.

As mentioned above, the electrical resistance value of the first heating resistor 121a is smaller than the electrical resistance value of the second heating resistor 121b, so a larger current can flow to the first heating resistor 121a, in other words power supply to the heating unit 121 can be increased, when power is supplied to the first heating resistor 121a than when power is supplied to the second heating resistor 121b.

Accordingly, when the type of charging device 50 obtained as the identification result is a predetermined type (e.g., the second type), the control unit 116 may supply the heating unit 121 with the relatively large first power, similarly to the example described above, by supplying power to the first heating resistor 121a. Meanwhile, when the type of charging device 50 obtained as the identification result is another type, the control unit 116 may supply the heating unit 121 with the relatively small second power, similarly to the example described above, by supplying power to the second heating resistor 121b.

The same advantageous effects as in the example described above can therefore also be achieved when the inhalation device 100 is configured in this way. That is to say, when a charging device 50 of the predetermined type which is capable of outputting a large current is used, the heating unit 121 may also be supplied with the relatively large first power while charging of the power source unit 111 is in progress, so that an aerosol can be quickly generated by the heating unit 121, thereby improving convenience. Meanwhile, when a charging device 50 of the second type from which it is difficult to output a large current is used, the heating unit 121 is supplied with the relatively small second power to thereby restrict application of an excessive load to the charging device 50 while the user is still able to inhale the aerosol, which improves safety.

It should be noted that, in the example described above, power was supplied to the first heating resistor 121a when the type of charging device 50 obtained as the identification result is a predetermined type (e.g., the second type), and power was supplied to the second heating resistor 121b for other types, but this is not limiting.

For example, when the type of charging device 50 obtained as the identification result is a predetermined type (e.g., the second type), the control unit 116 may supply power to each of the first heating resistor 121a and the second heating resistor 121b, but the power supplied to the first heating resistor 121a may be greater than the power supplied to the second heating resistor 121b. Meanwhile, when the type of charging device 50 obtained as the identification result is another type, the control unit 116 may supply power to each of the first heating resistor 121a and the second heating resistor 121b, but the power supplied to the second heating resistor 121b may be greater than the power supplied to the first heating resistor 121a.

The same advantageous effects as in the example described above can therefore also be achieved with such a configuration. That is to say, when a charging device 50 of the predetermined type which is capable of outputting a large current is used, the heating unit 121 may also be supplied with the relatively large first power while charging of the power source unit 111 is in progress, so that an aerosol can be quickly generated by the heating unit 121, thereby improving convenience. Meanwhile, when a charging device 50 of the second type from which it is difficult to output a large current is used, the heating unit 121 is supplied with the relatively small second power to thereby restrict application of an excessive load to the charging device 50 while the user is still able to inhale the aerosol, which improves safety.

Furthermore, in the example described above, the heating unit 121 comprised two heating resistors, namely the first heating resistor 121a and the second heating resistor 121b, but this is not limiting. For example, the heating unit 121 may equally comprise three or more heating resistors having different electrical resistance values.

As described above, the inhalation device 100 according to the embodiment makes it possible to identify the type of connected charging device and to perform control commensurate with the result of this identification.

For example, according to the inhalation device 100 of the embodiment, if there is an aerosol generation request from a user while the power source unit 111 is being charged with power received from the charging device 50 via the receptacle 101, power supply to the heating unit 121 is controlled based on the result of identifying the type of charging device 50. This enables power supply to the heating unit 121 to be appropriately controlled while taking account of the type of charging device 50, even while charging of the power source unit 111 is in progress.

Furthermore, the method for controlling the inhalation device 100 described in the embodiments above can be realized by executing a pre-prepared program on a computer (processor). The program is stored on a computer-readable storage medium, and is executed by being read out from the storage medium. The program may also be provided in a form stored in a non-transitory storage medium such as a flash memory, or may be provided over a network such as the Internet. Furthermore, the computer executing the program may be, for example, included in the inhalation device 100 (e.g., the MCU 105), but this is not limiting, and the computer may also be included in another device (e.g., a smartphone or server) capable of communicating with the inhalation device 100.

Embodiments of the power supply unit for an aerosol-generating device and the control method according to the present disclosure were described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.
(1) A power supply unit (power supply unit 110; inhalation device 100B) for an aerosol-generating device (inhalation device 100, 100A, 100B) for generating an aerosol by heating an aerosol source, the power supply unit comprising:
   a power source (power source unit 111, 111A, 111B) configured to be capable of supplying power to a heating unit (heating unit 121, 121A, 121B; flavor source heating unit 132) for heating the aerosol source;
   a receptacle (receptacle 101) which is configured to enable insertion of a plug (plug 52) of a charging device (charging device 50) and receives power from the inserted plug; and
   a control unit (control unit 116, 116A, 116B; charging IC 102; MCU 105) configured to be capable of controlling power supply to the heating unit,
   wherein
   the control unit
   is configured to be capable of identifying the type of charging device comprising the plug when said plug has been inserted into the receptacle, and
   controls power supply to the heating unit based on a result of identifying the type of charging device if there is an aerosol generation request from a user while the power source is being charged with power received via the receptacle.
   According to (1), power supply to the heating unit is controlled based on a result of identifying the type of charging device if there is an aerosol generation request from a user while the power source is being charged with power received via the receptacle. This enables power supply to the heating unit to be appropriately controlled while taking account of the type of charging device, even while charging of the power source is in progress. For example, when a charging device of a type which is capable of outputting a large current is used, the heating unit may also be supplied with relatively large power while charging of the power source is in progress, thereby improving convenience. Meanwhile, when a charging device of a type from which it is difficult to output a large current is used, application of an excessive load to the charging device is restricted by limiting power supply to the heating unit while charging of the power source is in progress, thereby improving safety.
(2) The power supply unit as disclosed in (1), wherein
   the control unit
   supplies the heating unit with first power when the type of charging device obtained as the identification result is a first type, and
   does not supply the heating unit with power or supplies the heating unit with second power smaller than the first power when the type of charging device obtained as the identification result is a second type.
   According to (2), when a charging device of the first type which is capable of outputting a large current is used, the heating unit may also be supplied with the relatively large first power while charging of the power source is in progress, thereby improving convenience. Meanwhile, when a charging device of the second type from which it is difficult to output a large current is used, application of an excessive load to the charging device is restricted by not supplying power to the heating unit or by supplying the relatively small second power to the heating unit, thereby improving safety.
(3) The power supply unit as disclosed in (2), wherein
   the power source is configured to be capable of supplying power to the heating unit via a DC/DC converter (DC/DC converter 103), and
   the control unit
   is configured to be capable of controlling the DC/DC converter,
   supplies the heating unit with power based on a first voltage generated by means of the DC/DC converter, as the first power, when the type of charging device obtained as the identification result is the first type, and
   supplies the heating unit with power based on a second voltage generated by means of the DC/DC converter, as the second power, when the type of charging device obtained as the identification result is the second type,
   the first voltage being higher than the second voltage.
   According to (3), when a charging device of the first type which is capable of outputting a large current is used, the heating unit may be supplied with the first power based on the relatively high first voltage generated by means of the DC/DC converter, thereby improving convenience. Meanwhile, when a charging device of the second type from which it is difficult to output a large current is used, the heating unit is supplied with the second power based on the relatively low second voltage generated by means of the DC/DC converter while charging of the power source is in progress, thereby restricting application of an excessive load to the charging device and improving safety.
(4) The power supply unit as disclosed in (1), wherein
   the heating unit has a first heating resistor (first heating resistor 121a) and a second heating resistor (second heating resistor 121b) for heating the aerosol source,
   the first heating resistor has a smaller electrical resistance value than the second heating resistor, and
   the control unit
   supplies power to the first heating resistor when the type of charging device obtained as the identification result is a first type, and
   supplies power to the second heating resistor when the type of charging device obtained as the identification result is a second type.
   According to (4), when a charging device of the first type which is capable of outputting a large current is used, the heating unit is supplied with relatively large power employing a large current by supplying power to the first heating resistor having a small electrical resistance value. Meanwhile, when a charging device of the second type from which it is difficult to output a large current is used, power supply to the heating unit may be restricted by supplying power to the second heating resistor having a large electrical resistance value.
(5) The power supply unit as disclosed in (1), wherein
   the heating unit has a first heating resistor (first heating resistor 121a) and a second heating resistor (second heating resistor 121b) for heating the aerosol source,
   the first heating resistor has a smaller electrical resistance value than the second heating resistor, and
   the control unit
   makes the power supplied to the first heating resistor greater than the power supplied to the second heating resistor when the type of charging device obtained as the identification result is the first type, and
   makes the power supplied to the second heating resistor greater than the power supplied to the first heating resistor when the type of charging device obtained as the identification result is the second type.
   According to (5), when a charging device of the first type which is capable of outputting a large current is used, the heating unit may be supplied with relatively large power employing a large current by making the power supplied to the first heating resistor having a small electrical resistance value greater than the power supplied to the second heating resistor having a large electrical resistance value. Meanwhile, when a charging device of the second type from which it is difficult to output a large current is used, power supply to the heating unit may be restricted by making the power supplied to the second heating resistor greater than the power supplied to the first heating resistor.
(6) The power supply unit as disclosed in any of (1) to (5), wherein
   the control unit
   is further configured to be capable of controlling charging of the power source, and controls charging of the power source based on the result of identifying the type of charging device.
   According to (6), charging of the power source can be appropriately controlled while taking account of the type of charging device.
(7) The power supply unit as disclosed in (6), wherein
   a current value of the charging current during charging of the power source is set at a first current value (I1) when the type of charging device obtained as the identification result is the first type, and
   the current value of the charging current is set at a second current value (I2) smaller than the first current value when the type of charging device obtained as the identification result is the second type.
   According to (7), when a charging device of the first type which is capable of outputting a large current is used, the power source can be quickly charged using a large current by setting the current value of the charging current at the relatively large first current value. Meanwhile, when a charging device of the second type from which it is difficult to output a large current is used, application of an excessive load to the charging device is restricted by setting the current value of the charging current at the relatively small second current value, thereby improving safety.
(8) The power supply unit as disclosed in (6), wherein
   the power supply unit is configured to be capable of supplying the heating unit with power received via the receptacle, and
   the control unit determines the current value of the power supplied to the heating unit and the current value of the charging current during charging of the power source based on the result of identifying the type of charging device if there is an abovementioned generation request while the power source is being charged with power received via the receptacle.
   According to (8), power supply to the heating unit and charging of the power source may be performed at suitable current values that take account of the type of charging device.
(9) The power supply unit as disclosed in any of (1) to (8), wherein
   the charging device comprises an identification circuit (identification circuit 55, 55A, 55B, 55C, 55D) commensurate with the type of charging device,
   the control unit
   comprises a first terminal (IO1 terminal) connected to one end (one end Cp1) of the identification circuit of the charging device comprising the plug inserted into the receptacle, and a second terminal (102 terminal, AD2 terminal) connected to another end (other end Cp2) of said identification circuit, and
   the type of charging device is identified based on input to the second terminal when a predetermined signal (input signal SG1) was output from the first terminal.
   According to (9), the type of charging device can be accurately identified using a simple configuration.
(10) The power supply unit as disclosed in (9), wherein
   the control unit identifies the type of charging device based on an input voltage to the second terminal when a pulse signal was output as the predetermined signal.
   According to (10), the type of charging device can be accurately identified using a simple configuration.
(11) The power supply unit as disclosed in (9) or (10), wherein
   the control unit
   acquires each of an input to the second terminal when the predetermined signal was output from the first terminal, and an input to the first terminal when the predetermined signal was output from the second terminal, and
   identifies the type of charging device based on the acquired input to the second terminal and input to the first terminal.
   According to (11), the type of charging device can still be accurately identified even if there is a temporary drop in the quality of the signal input to the identification circuit of the charging device or the second terminal of the control unit.
(12) The power supply unit as disclosed in (11), wherein
   the control unit
   identifies the type of charging device based on the input to the second terminal and/or the input to the first terminal if the acquired input to the second terminal and input to the first terminal are matching.
   According to (12), the type of charging device can be more accurately identified.
(13) The power supply unit as disclosed in (12), wherein
   the control unit
   once again acquires each of the input to the second terminal when the predetermined signal was output from the first terminal, and the input to the first terminal when the predetermined signal was output from the second terminal, if the acquired input to the second terminal and input to the first terminal are not matching.
   According to (13), the type of charging device can be more accurately identified.
(14) The power supply unit as disclosed in any of (1) to (8), wherein
   the control unit
   identifies the type of charging device based on a voltage of supply power from the charging device when a predetermined current is caused to be output from the charging device comprising the plug inserted into the receptacle.
   According to (14), the control unit can identify the type of charging device with a simpler configuration.
(15) A control method performed by a computer (control unit 116, 116A, 116B; charging IC 102; MCU 105) for controlling a power supply unit (power supply unit 110; inhalation device 100B) for an aerosol-generating device (inhalation device 100, 100A, 100B) for generating an aerosol by heating an aerosol source, wherein
   the power supply unit comprises
   a power source (power source unit 111, 111A, 111B) configured to be capable of supplying power to a heating unit (heating unit 121, 121A, 121B; flavor source heating unit 132) for heating the aerosol source; and
   a receptacle (receptacle 101) which is configured to enable insertion of a plug (plug 52) of a charging device (charging device 50) and receives power from the inserted plug,
   wherein
   the computer is configured to be capable of controlling power supply to the heating unit, and the computer implements processing which
   identifies the type of charging device comprising the plug when said plug has been inserted into the receptacle (step S12), and
   controls power supply to the heating unit based on a result of identifying the type of charging device if there is an aerosol generation request from a user while the power source is being charged with power received via the receptacle (steps S23, S24).
   According to (15), power supply to the heating unit is controlled based on a result of identifying the type of charging device if there is an aerosol generation request from a user while the power source is being charged with power received via the receptacle. This enables power supply to the heating unit to be appropriately controlled while taking account of the type of charging device, even while charging of the power source is in progress. For example, when a charging device of a type which is capable of outputting a large current is used, the heating unit may also be supplied with relatively large power while charging of the power source is in progress, thereby improving convenience. Meanwhile, when a charging device of a type from which it is difficult to output a large current is used, application of an excessive load to the charging device is restricted by limiting power supply to the heating unit while charging of the power source is in progress, thereby improving safety.
(16) A control program which causes a computer (control unit 116, 116A, 116B; charging IC 102; MCU 105) for controlling a power supply unit (power supply unit 110; inhalation device 100B) for an aerosol-generating device (inhalation device 100, 100A, 100B) for generating an aerosol by heating an aerosol source, to implement predetermined processing, wherein
   the power supply unit comprises
   a power source (power source unit 111, 111A, 111B) configured to be capable of supplying power to a heating unit (heating unit 121, 121A, 121B; flavor source heating unit 132) for heating the aerosol source; and
   a receptacle (receptacle 101) which is configured to enable insertion of a plug (plug 52) of a charging device (charging device 50) and receives power from the inserted plug,
   wherein
   the computer is configured to be capable of controlling power supply to the heating unit, and the control program causes the computer to implement processing which identifies the type of charging device comprising the plug when said plug has been inserted into the receptacle (step S12), and
   controls power supply to the heating unit based on a result of identifying the type of charging device if there is an aerosol generation request from a user while the power source is being charged with power received via the receptacle (steps S23, S24).
   According to (16), power supply to the heating unit is controlled based on a result of identifying the type of charging device if there is an aerosol generation request from a user while the power source is being charged with power received via the receptacle. This enables power supply to the heating unit to be appropriately controlled while taking account of the type of charging device, even while charging of the power source is in progress. For example, when a charging device of a type which is capable of outputting a large current is used, the heating unit may also be supplied with relatively large power while charging of the power source is in progress, thereby improving convenience. Meanwhile, when a charging device of a type from which it is difficult to output a large current is used, application of an excessive load to the charging device is restricted by limiting power supply to the heating unit while charging of the power source is in progress, thereby improving safety.
(17) A computer-readable storage medium (memory unit 114, 114A, 114B) which stores the control program disclosed in (16).

According to (17), it is possible to cause a computer to implement the control program disclosed in (16).

### REFERENCE SIGNS LIST

50 Charging device
52 Plug
100, 100A, 100B Inhalation device (aerosol-generating device, power supply unit)
101 Receptacle
102 Charging IC (control unit, computer)
103 DC/DC converter
105 MCU (control unit, computer)
110 Power supply unit
111, 111A, 111B Power source unit (power source)
116, 116A, 116B Control unit (computer)
121, 121A, 121B Heating unit
121a First heating resistor
121b Second heating resistor
132 Flavor source heating unit (heating unit)

## Claims

1. A power supply unit for an aerosol-generating device for generating an aerosol by heating an aerosol source, the power supply unit comprising:
a power source configured to be capable of supplying power to a heating unit for heating the aerosol source;
a receptacle which is configured to enable insertion of a plug of a charging device and receives power from the inserted plug; and
a control unit configured to be capable of controlling power supply to the heating unit,
wherein
the control unit
is configured to be capable of identifying the type of charging device comprising the plug when said plug has been inserted into the receptacle, and
controls power supply to the heating unit based on a result of identifying the type of charging device if there is an aerosol generation request from a user while the power source is being charged with power received via the receptacle.

2. The power supply unit as claimed in claim 1, wherein
the control unit
supplies the heating unit with first power when the type of charging device obtained as the identification result is a first type, and
does not supply the heating unit with power or supplies the heating unit with second power smaller than the first power when the type of charging device obtained as the identification result is a second type.

3. The power supply unit as claimed in claim 2, wherein
the power source is configured to be capable of supplying power to the heating unit via a DC/DC converter, and
the control unit
is configured to be capable of controlling the DC/DC converter,
supplies the heating unit with power based on a first voltage generated by means of the DC/DC converter, as the first power, when the type of charging device obtained as the identification result is the first type, and
supplies the heating unit with power based on a second voltage generated by means of the DC/DC converter, as the second power, when the type of charging device obtained as the identification result is the second type,
the first voltage being higher than the second voltage.

4. The power supply unit as claimed in claim 1, wherein
the heating unit has a first heating resistor and a second heating resistor for heating the aerosol source,
the first heating resistor has a smaller electrical resistance value than the second heating resistor, and
the control unit
supplies power to the first heating resistor when the type of charging device obtained as the identification result is a first type, and
supplies power to the second heating resistor when the type of charging device obtained as the identification result is a second type.

5. The power supply unit as claimed in claim 1, wherein
the heating unit has a first heating resistor and a second heating resistor for heating the aerosol source,
the first heating resistor has a smaller electrical resistance value than the second heating resistor, and
the control unit
makes the power supplied to the first heating resistor greater than the power supplied to the second heating resistor when the type of charging device obtained as the identification result is the first type, and
makes the power supplied to the second heating resistor greater than the power supplied to the first heating resistor when the type of charging device obtained as the identification result is the second type.

6. The power supply unit as claimed in any one of claims 1 to 5, wherein
the control unit
is further configured to be capable of controlling charging of the power source, and
controls charging of the power source based on the result of identifying the type of charging device.

7. The power supply unit as claimed in claim 6, wherein
a current value of the charging current during charging of the power source is set at a first current value when the type of charging device obtained as the identification result is the first type, and
the current value of the charging current is set at a second current value smaller than the first current value when the type of charging device obtained as the identification result is the second type.

8. The power supply unit as claimed in claim 6, wherein
the power supply unit is configured to be capable of supplying the heating unit with power received via the receptacle, and
the control unit determines the current value of the power supplied to the heating unit and the current value of the charging current during charging of the power source based on the result of identifying the type of charging device if there is an abovementioned generation request while the power source is being charged with power received via the receptacle.

9. The power supply unit as claimed in any one of claims 1 to 8, wherein
the charging device comprises an identification circuit commensurate with the type of charging device,
the control unit
comprises a first terminal connected to one end of the identification circuit of the charging device comprising the plug inserted into the receptacle, and a second terminal connected to another end of said identification circuit, and
the type of charging device is identified based on input to the second terminal when a predetermined signal was output from the first terminal.

10. The power supply unit as claimed in claim 9, wherein
the control unit identifies the type of charging device based on an input voltage to the second terminal when a pulse signal was output as the predetermined signal.

11. The power supply unit as claimed in claim 9 or 10, wherein
the control unit
acquires each of an input to the second terminal when the predetermined signal was output from the first terminal, and an input to the first terminal when the predetermined signal was output from the second terminal, and
identifies the type of charging device based on the acquired input to the second terminal and input to the first terminal.

12. The power supply unit as claimed in claim 11, wherein
the control unit
identifies the type of charging device based on the input to the second terminal and/or the input to the first terminal if the acquired input to the second terminal and input to the first terminal are matching.

13. The power supply unit as claimed in claim 12, wherein
the control unit
once again acquires each of the input to the second terminal when the predetermined signal was output from the first terminal, and the input to the first terminal when the predetermined signal was output from the second terminal, if the acquired input to the second terminal and input to the first terminal are not matching.

14. The power supply unit as claimed in any one of claims 1 to 8, wherein
the control unit
identifies the type of charging device based on a voltage of supply power from the charging device when a predetermined current is caused to be output from the charging device comprising the plug inserted into the receptacle.

15. A control method performed by a computer for controlling a power supply unit for an aerosol-generating device for generating an aerosol by heating an aerosol source, wherein
the power supply unit comprises
a power source configured to be capable of supplying power to a heating unit for heating the aerosol source; and
a receptacle which is configured to enable insertion of a plug of a charging device and receives power from the inserted plug,
and wherein
the computer is configured to be capable of controlling power supply to the heating unit, and the computer implements processing which
identifies the type of charging device comprising the plug when said plug has been inserted into the receptacle, and
controls power supply to the heating unit based on a result of identifying the type of charging device if there is an aerosol generation request from a user while the power source is being charged with power received via the receptacle.
